# EUROPEAN PATENT SPECIFICATION

(11) **EP 4 484 240 B1**
(45) Date of publication and mention of the grant of the patent: **19.11.2025**
(21) Application number: 24171552.3
(22) Date of filing: 22.04.2024
(51) Int. Cl.: B60W 30/18, B60W 60/00, B60W 30/12

(54) **DRIVING CONTROL APPARATUS FOR VEHICLE**
ANTRIEBSSTEUERUNGSVORRICHTUNG FÜR EIN FAHRZEUG
APPAREIL DE COMMANDE DE CONDUITE POUR VÉHICULE

(30) Priority: 30.06.2023 JP 2023108362
(43) Date of publication of application: 01.01.2025
(73) Proprietor: Suzuki Motor Corporation, Shizuoka 432-8611 (JP)
(72) Inventor: KIDA, Shogo, HAMAMATSU-SHI, 432-8611 (JP); TOJO, Yoshiaki, HAMAMATSU-SHI, 432-8611 (JP)
(74) Representative: Plasseraud IP

(56) References cited:
- DE-A1- 102016 215 046
- JP-A- 2020 066 383
- US-A1- 2021 387 619
- US-A1- 2022 250 643

## Description

### [Technical Field]

The present invention relates to a driving control apparatus for vehicle capable of executing automated driving.

### [Background Art]

Development of vehicles for performing automated driving by control of an automatic operation apparatus has been progressing. In a vehicle in which automated driving equivalent to SAE (Society of Automotive Engineers) levels 3-5 is performed, an automatic operation apparatus mainly performs vehicle control according to automated driving levels. Therefore, even in a case of driving through a curved section, it is basically not necessary for a driver to perform a driving operation. When driving through a curved section by automated driving, a case of performing speed control of a vehicle so as to drive at a same speed as that of a straight path, and a case of performing speed control so as to drive through a curved section at a speed different from that of a straight path, can be considered.

As an example of speed control of an automated driving vehicle in a curved section, JP 2020 066383 A discloses a vehicle control apparatus that sets a target vehicle speed to perform turn driving through a curved path, and sets a target acceleration rate to implement the target vehicle speed, by taking into consideration an inter-vehicle distance with a front vehicle, a turning radius of a curved path and the like. The apparatus of JP 2020 066383 A reduces car sickness of an occupant, by performing turn driving at an almost constant acceleration rate, from a start of turn driving until completion. DE10 2016 215046 A1, US2021/387619 A1 and US2022/250643 A1 disclose further driving control apparatuses for vehicle.

### [Summary of Invention]

### [Problem to be Solved by the Invention]

As stated, in a vehicle in which automated driving equivalent to levels 3-5 is performed, since vehicle control is performed with an automatic operation apparatus as a main actor, it is basically not necessary for a driver to perform a driving operation during automated driving, and the driver rides as a passenger, and not as a driver, even if sitting in the driver's seat. A passenger riding during automated driving tends to feel uncomfortable or uneasy in a case in which the behavior of a vehicle during automated driving is different from the behavior of a vehicle in which a passenger himself or herself performs a driving operation. In particular, in a case in which a vehicle drives through a curved section, a passenger is likely to feel uneasy as to whether vehicle control is appropriately performed by the automatic operation apparatus, and this feeling of uneasiness may increase by the surrounding environment of a curved section.

In view of such circumstances, an object of the present invention is to provide a driving control apparatus for vehicle that can reduce a feeling of uneasiness of a passenger when driving through a curved section by automated driving.

### [Means for Solving the Problem]

According to the present invention, a driving control apparatus for vehicle capable of executing automated driving includes an environment state acquiring part for acquiring information related to a vehicle state and a surrounding environment of the vehicle, a path generating part for generating a driving path for automated driving based on information acquired by the environment state acquiring part, a curve detecting part for detecting a curved section present on the driving path based on information acquired by the environment state acquiring part, a target speed calculating part for calculating a target speed for the vehicle to perform automated driving in accordance with the driving path generated by the path generating part, and a vehicle control part for performing a speed control of the vehicle so as to drive along the driving path at the target speed, in which the target speed calculating part calculates a first vehicle speed as the target speed such that a lateral acceleration rate of the vehicle is made to be a prescribed value or lower when the vehicle performs automated driving in accordance with the driving path, and in a case in which a curved section is present in the driving path, the target speed calculating part sets the target speed for an inner curved section, in which a driving traffic lane of the vehicle is at an inner side in a curve, to a second vehicle speed less than the first vehicle speed, and sets the target speed for an outer curved section, in which a driving traffic lane of the vehicle is at an outer side in a curve, to a third vehicle speed less than the second vehicle speed.

### [Advantageous Effect of Invention]

The driving control apparatus for vehicle according to the present invention can reduce a feeling of uneasiness of a passenger when driving through a curved section by automated driving.

### [Brief Description of Drawings]

[Figure 1] Figure 1 is a block diagram showing a schematic configuration of a driving control apparatus for vehicle in a first embodiment of the present invention.
[Figure 2] Figures 2(a) and 2(b) are figures schematically showing a curved section.
[Figure 3] Figure 3 is a flow chart for describing a flow of speed control in the first embodiment.
[Figure 4] Figure 4 is a block diagram showing a schematic configuration of a driving control apparatus for vehicle in a second embodiment of the present invention.
[Figure 5] Figures 5(a) and 5(b) are figures schematically showing a curved section in which a guard rail is present.
[Figure 6] Figure 6 is a flow chart for describing a flow of speed control in the second embodiment.

### [Mode for Carrying Out the Invention]

### First Embodiment

Hereinafter, a driving control apparatus for vehicle according to a first embodiment of the present invention will be described in detail by referring to the drawings. The driving control apparatus for vehicle according to the present embodiment is configured to be capable of executing automated driving by recognizing an ego vehicle position and a surrounding environment of an ego vehicle (own vehicle) by means of external sensors such as a radar and camera, and controlling a vehicle speed and steering.

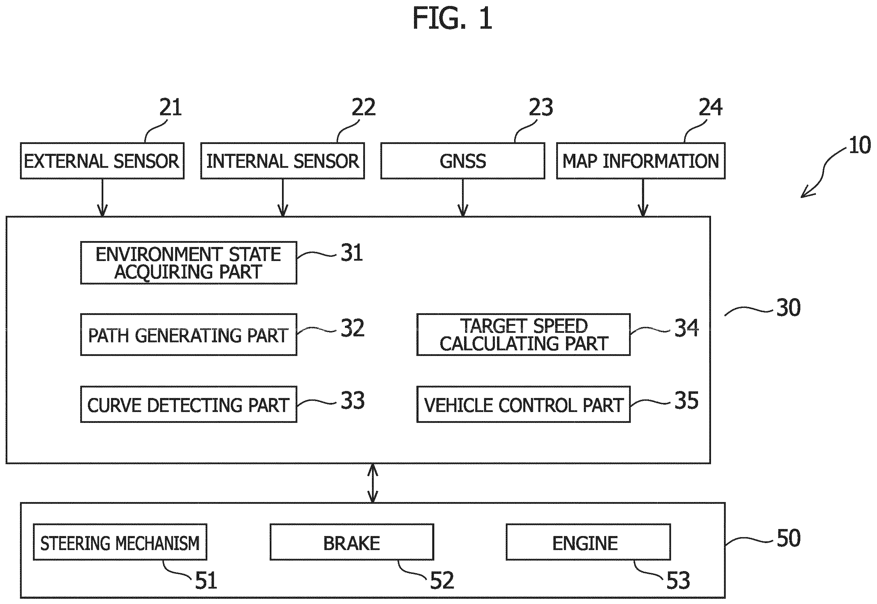

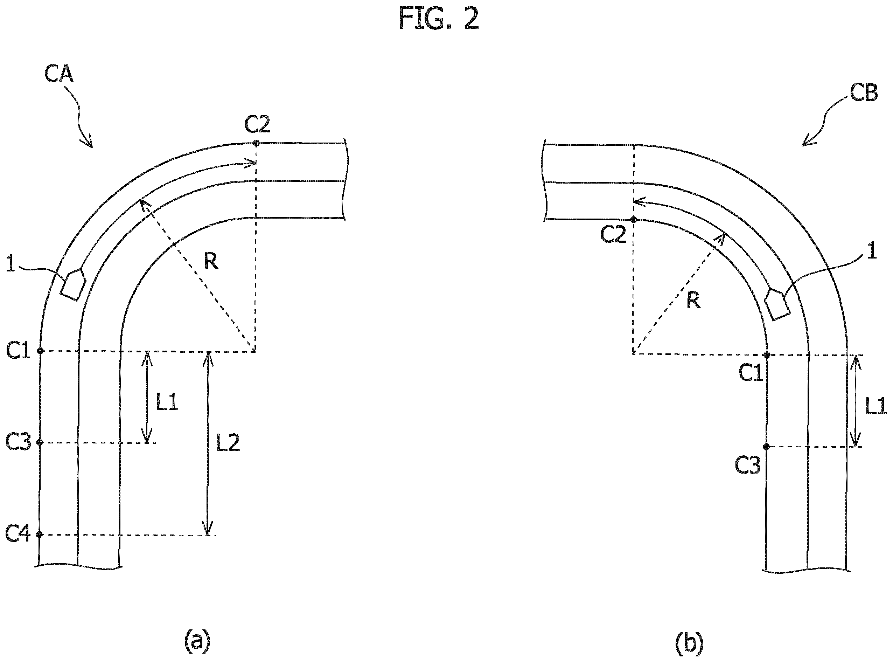

Figure 1 is a block diagram showing a schematic configuration of a driving control apparatus for vehicle in the first embodiment, and Figures 2(a) and 2(b) are figures schematically showing a curved section in which a vehicle travels. A driving control apparatus 10 of a vehicle 1 includes an external sensor 21 for detecting a vehicle surrounding environment, an internal sensor 22 for detecting a vehicle state that includes a driving state, a positioning device 23 such as a Global Navigation Satellite System (GNSS), a map information database 24, an automated driving controller 30, a driving module 50 and the like. In the present embodiment, it is assumed that the vehicle 1 performs automated driving on a typical (local) road, however, the present embodiment may also be applied to a road other than a typical road, such as a highway.

The external sensor 21 includes a plurality of detection means for detecting lane markings on a road that define an own traffic lane in which the vehicle 1 travels and an adjacent traffic lane, and presence of and relative distances to obstacles such as another vehicle and a ground object in the surroundings of the vehicle 1, as external data such as image data or point cloud data.

The external sensor 21 includes, for example, a plurality of cameras that image the front region and rear region of the vehicle 1 by using imaging elements, a millimeter wave radar that transmits radio waves to the front region of the vehicle 1 so as to detect obstacles, LiDAR that irradiates laser light to the front region and rear region of the vehicle so as to measure distances and directions to obstacles, and the like. Note that the external sensor 21 is not limited to the detection means described above, and it may be configured to cover 360 degrees around the vehicle 1 so as to detect distances and positions of obstacles or the like within a prescribed range in the front-rear and the left-right directions of the vehicle 1, and lane marking positions of a traffic lane in which it is in, and an adjacent traffic lane.

The internal sensor 22 includes a plurality of detection means for measuring physical quantities that represent a driving state of the vehicle 1. The internal sensor 22 includes, for example, a vehicle speed sensor for detecting a vehicle speed of the vehicle 1, a lateral acceleration sensor for detecting an acceleration rate in a vehicle width direction of the vehicle 1, that is, a lateral acceleration rate, a yaw rate sensor for detecting a yaw rate of the vehicle 1, an acceleration sensor for detecting an acceleration rate in a front-rear direction of the vehicle 1 and the like.

The external sensor 21 and the internal sensor 22 are configured so as to start an operation at the same time as a start of the vehicle 1, to constantly monitor a surrounding environment and vehicle state of the vehicle 1, and to transmit the detected data to the automated driving controller 30.

The positioning device 23 is configured so as to receive radio waves from a GNSS satellite, and acquire current position information such as latitude and longitude of the vehicle 1. The map information database 24, for example, is a storage device for storing map information such as a three-dimensional high precision map. For example, information related to a limit speed set by a road type or road sign, information related to a shape of a road such as a curvature, a gradient, and a number of traffic lanes, information related to obstacles such as a guard rail or a side wall present along a road, information related to a steep inclined section present in the road surroundings such as a cliff shaped inclined surface and the like are stored, in association with position information of a road, in the map information database 24. Current position information acquired by the positioning device 23 and map information of the map information database 24 are input to the automated driving controller 30.

The automated driving controller 30, for example, is constituted with a computer that includes a ROM for storing programs and data, a CPU for performing arithmetic processes, a RAM for storing active data and arithmetic process results, an input/output interface and the like. The automated driving controller 30 is configured to execute functions of an environment state acquiring part 31, a path generating part 32, a curve detecting part 33, a target speed calculating part 34, and a vehicle control part 35, and to perform overall control of the driving control apparatus 10 for the vehicle 1.

The environment state acquiring part 31 is configured so as to acquire information related to a vehicle state and a surrounding environment of the vehicle 1. For example, the environment state acquiring part 31 estimates an absolute position of the vehicle 1 (an ego vehicle position) by matching position information of the vehicle 1 input from the positioning device 23 and map information input from the map information database 24. The environment state acquiring part 31 estimates the lane marking positions of a traffic lane in which the vehicle is in (own traffic lane) and an adjacent traffic lane, the position and speed of other vehicles and the like, based on external data such as image data and point cloud data input from the external sensor 21.

Moreover, the environment state acquiring part 31 acquires a vehicle state that includes a driving state of the vehicle 1 based on internal data input from the internal sensor 22. Note that the environment state acquiring part 31 can be configured so as to obtain a relative position of the vehicle 1 with respect to the lane marking with an adjacent traffic lane based on external data input from the external sensor 21, instead of estimating an absolute position of the vehicle 1 by matching position information of the vehicle 1 and map information. Moreover, information related to obstacles such as a guard rail or a side wall present along a road may be acquired by the environment state acquiring part 31 based on external data input from the external sensor 21, instead of, or in addition to, storing it in the map information database 24.

The path generating part 32 is configured so as to generate a driving path for automated driving, based on information acquired by the environment state acquiring part 31. Specifically, the path generating part 32 generates a driving path for the vehicle 1 to travel from the ego vehicle position of the vehicle 1 estimated by the environment state acquiring part 31 to an arrival target of automated driving.

The curve detecting part 33 detects a curved section present on the driving path generated by the path generating part 32. For example, the curve detecting part 33 detects whether or not a curved section is present on the driving path, based on information related to the road shape input from the map information database 24. The curved section will be described later.

The target speed calculating part 34 is configured so as to calculate a target speed when the vehicle 1 performs automated driving in accordance with the driving path generated by the path generating part 32. For example, the target speed calculating part 34 calculates a target speed so as to achieve a vehicle speed which is based on a set speed selected by a user to be a limit speed of the road or lower for automated driving. Specifically, the target speed calculating part 34 calculates a target speed, which is equal to the limit speed of the road or lower and is equal to the set speed selected by the user or lower, such that a lateral acceleration rate of the vehicle 1 traveling in accordance with the driving path becomes a prescribed value G1 or lower. Note that a target steering angle when the vehicle 1 performs automated driving is also calculated in accordance with the driving path generated by the path generating part 32.

Here, the prescribed value G1 of a lateral acceleration rate is set, for example, to a value such that the vehicle 1 does not cause lateral skidding at a time of driving through a curved section. A lateral acceleration rate A when the vehicle 1 drives at a constant vehicle speed V and a constant steering angle without generating lateral skidding can be represented as A=V²/R, for example, based on a curvature radius R of the driving path and a vehicle speed V. The target speed calculating part 34 calculates the vehicle speed V at which a lateral acceleration rate becomes the prescribed value G1 (for example, G1=0.3G) or lower, as a basic target speed V1 of the vehicle 1 driving in accordance with the driving path, based on the curvature radius R of the driving path acquired from road information of the map information database 24.

The vehicle control part 35 transmits a drive command to a driving module 50, and controls movement of the vehicle 1 in a longitudinal direction and a lateral direction, so that the vehicle 1 drives at the target speed and target steering angle calculated by the target speed calculating part 34 in accordance with the driving path generated by the path generating part 32. The vehicle control part 35 estimates a speed, orientation, and lateral displacement of the vehicle 1 after Δt seconds, for example, based on the ego vehicle position and movement characteristics of the vehicle 1, that is, the relationship of a yaw rate γ and lateral acceleration rate (d²y/dt²) generated by vehicle movement with a front wheel steering angle δ which is generated by a steering torque T at a steering mechanism while driving at the vehicle speed V. The vehicle control part 35 transmits to the driving module 50 a steering angle command for bringing a lateral displacement to yt after Δt seconds, and a speed command for achieving a speed Vt after Δt seconds.

The driving module 50 includes a driving actuator, a controller for controlling the driving actuator and the like. The driving actuator includes a steering mechanism 51, a brake 52, and an engine 53. The driving module 50 controls operation of the steering mechanism 51, the brake 52, and the engine 53, so that the vehicle 1 drives in accordance with the driving path at the target speed and target steering angle, based on the drive commands from the vehicle control part 35. Note that the driving module 50 may be configured so as to include a driving motor, instead of the engine 53, or in addition to the engine 53. In this case, the vehicle 1 functions as an electric vehicle or a hybrid vehicle.

When a deceleration command is input from the vehicle control part 35, the driving module 50 controls the vehicle speed by controlling a braking force of the brake 52. When an acceleration/deceleration command is input from the vehicle control part 35, the driving module 50 controls the vehicle speed by controlling a driving force of the engine 53. Moreover, when a steering command is input from the vehicle control part 35, the driving module 50 performs steering control by controlling the steering mechanism 51.

In a case in which there is no preceding vehicle, the automated driving controller 30 controls the vehicle 1 so as to perform constant speed driving at the target speed described above. In a case in which a speed of a preceding vehicle is at the target speed or lower and the vehicle 1 is approaching the preceding vehicle, the automated driving controller 30 controls the vehicle 1 so as to follow the preceding vehicle while maintaining an inter-vehicle distance corresponding to a set time gap (inter-vehicle time = inter-vehicle distance/ego vehicle speed), in accordance with the leading vehicle speed. In a case in which the preceding vehicle speed is faster than the speed of the vehicle 1, or the preceding vehicle has disappeared from in front of the vehicle 1, it is configured such that the vehicle accelerates to the target speed at a set acceleration rate.

Moreover, the automated driving controller 30 detects traffic lane markings and the ego vehicle position by the environment state acquiring part 31 based on the image data acquired by the external sensor 21, and performs a steering control so as to enable the vehicle 1 to travel at a center in the traffic lane. Note that the automated driving controller 30 can estimate the ego vehicle position of the vehicle 1 (position of the vehicle itself) by various techniques, and can perform steering control so as to follow the driving path. As a technique of a position estimation for path following, a position estimation by matching the point cloud data input from the external sensor 21 with a high precision map of point groups or a high precision map of a vector map obtained from the map information database 24, or a position estimation using a GNSS, can be performed, in addition to the position estimation on the basis of a white line based on the traffic lane markings (white lines) detected from the image data.

In this way, the automated driving controller 30 executes automated driving of the vehicle 1, by combining longitudinal control (speed control, inter-vehicle distance control) and lateral control (steering control, lane keeping control).

In a vehicle in which automated driving equivalent to SAE levels 3-5 is performed, since vehicle control is performed with an automatic operation apparatus for vehicle, that is, the automated driving controller 30 is the primary actor, it is basically not necessary for a driver to perform a driving operation during automated driving. Therefore, the driver rides as a passenger, even if sitting in the driver's seat. A passenger in the vehicle during automated driving tends to feel uncomfortable or uneasy in a case in which the behavior of the vehicle during automated driving is different to the behavior of the vehicle in which a passenger performs a driving operation. In particular, when the vehicle travels through a curved section, it is likely for the passenger to feel uneasy as to whether vehicle control is appropriately performed by the automated driving apparatus, and this feeling of uneasiness may increase by the surrounding environment of the curved section.

As an example, the curved section in traffic sectioning of left side traffic will be examined. Figures 2(a) and 2(b) schematically show a right curved section and a left curved section, respectively. A right curved section CA shown in Figure 2(a) can be defined as a section from a point C1 to a point C2 in which a road is curved in the right direction with a curvature of the road being a prescribed value or higher. A left curved section CB shown in Figure 2(b) can be defined as a section from a point C1 to a point C2 in which a road is curved in the left direction with a curvature of the road being a prescribed value or higher. The point C1 is a start position of the curved section, and the point C2 is an end position of the curved section.

Note that, alternatively, a curved section may be defined based on a lateral acceleration rate acting on the vehicle 1. In this case, for example, when the vehicle 1 travels at a speed set by a user which is equal to the limit speed of the road or lower, a section in which the lateral acceleration rate exceeding a preset value is generated can be defined as a curved section. Here, the value of the preset lateral acceleration rate for defining the curved section may be, for example, the same as the prescribed value G1 of the lateral acceleration rate as described above, or may be a different value.

In the explanation hereafter, the right curved section CA in traffic sectioning of left side traffic shown in Figure 2(a) may be called an outer curved section in which the left side traffic lane for the vehicle 1 to travel is positioned at the outer side in the curve, and the left curved section CB in traffic sectioning of left side traffic shown in Figure 2(b) may be called an inner curved section in which the left side traffic lane for the vehicle 1 to travel is positioned at the inner side in the curve. Note that, in a case of traffic sectioning of right side traffic, the right curved section corresponds to an inner curved section in which a traffic lane of the vehicle 1 is positioned at the inner side in the curve, and the left curved section corresponds to an outer curved section in which a traffic lane of the vehicle 1 is positioned at the outer side in the curve. Information such as positions (locations), curvatures, curve start positions C1, and curve end positions C2 of curved sections are stored in the map information database 24 as road information.

At a time of driving through a curved section, a centrifugal force in a direction to the outside of a road, that is, a lateral acceleration, acts on the vehicle. In a case in which the vehicle 1 drives in a traffic lane (left side traffic lane) on the outer side in the curve, such as the right curved section CA shown in Figure 2(a), since the left side traffic lane is a traffic lane nearest to the outside of the road, a passenger may feel a sensation that the vehicle 1 is being pushed to the outside of the road by a centrifugal force, or may feel a sensation that the outside of the road is approaching the vehicle 1, and thus, may feel uneasy. In the right curved section CA shown in Figure 2(a), since the traveling traffic lane is on the outer side in the curve, the passenger is more likely to feel uneasy when traveling through the right curved section CA than when traveling through the left curved section CB shown in Figure 2(b), even at a speed at which the same lateral acceleration rate is generated.

Accordingly, in the present embodiment, speed control of the vehicle 1 is adjusted so as to reduce a feeling of uneasiness of a passenger when driving through a curved section by automated driving. Specifically, a target speed for the vehicle 1 to travel through a curved section by automated driving is set to be less than the basic target speed V1 described above. In addition, a target speed of the right curved section (outer curved section) CA in which a driving traffic lane of the vehicle 1 is the outer side in the curve is set to be less than a target speed of the left curved section (inner curved section) CB in which a driving traffic lane of the vehicle 1 is the inner side in the curve.

The basic target speed V1 is a vehicle speed calculated so that a lateral acceleration rate becomes the prescribed value G1 or lower, based on the curvature radius R of the driving path as described above. Even for a curved section on the driving path, the target speed V1 at which a lateral acceleration rate is kept at the prescribed value G1 or lower is set in accordance with the curvature radius R. The target speed calculating part 34 calculates a target speed V2 for the left curved section CB and a target speed V3 for the right curved section CA, for example, by multiplying the basic target speed V1 by a preset first speed adjustment gain K1 and by a preset second speed adjustment gain K2, respectively. That is, a target speed of the left curved section CB can be represented as V2=K1xV1, and a target speed of the right curved section CA can be represented as V3=K2xV1. Here, the first speed adjustment gain K1 and the second speed adjustment gain K2 are set with an appropriate value in advance, so as to satisfy the relationship 1>K1>K2. The target speeds V1, V2, and V3 of curved sections in which the curvatures are the same as one another satisfy the relationship V1>V2>V3.

Alternatively, the target speed calculating part 34 may calculate a target speed of a curved section, so that a lateral acceleration rate of the vehicle 1 driving through a curved section by automated driving becomes less than the prescribed value G1 of a lateral acceleration rate which is used when calculating the basic target speed V1 as described above. For example, the target speed calculating part 34 sets limit values G2 and G3 of the lateral acceleration rate less than the prescribed value G1 of the lateral acceleration rate for calculating the basic target speed V1. The target speed calculating part 34 calculates the target speed V2 so as to keep a lateral acceleration rate of the vehicle 1 up to a first limit value G2 which is less than the prescribed value G1 when the vehicle 1 is driving through the left curved section CB, and calculates the target speed V3 so as to keep a lateral acceleration rate of the vehicle 1 up to a second limit value G3 which is less than the first limit value G2 when the vehicle 1 is driving through the right curved section CA. Here, the first limit value G2 and the second limit value G3 are set with an appropriate value in advance so as to satisfy G1>G2>G3. As a result, the target speeds V1, V2, and V3 of curved sections with the same curvature satisfy the relationship V1>V2>V3.

Moreover, in the present embodiment, the position of a deceleration start for entering into the outer curved section CA is different from the position of a deceleration start for entering into the inner curved section CB. A basic deceleration start position for decelerating to a target speed of a curved section is set to a point C3 in front by a prescribed distance L1 from the curve start position C1 of a curved section, such as shown in Figures 2(a) and 2(b), for example. In a case in which the curvatures of the outer curved section CA and the inner curved section CB are the same, the target speed V3 for the outer curved section CA is less than the target speed V2 for the inner curved section CB. Therefore, in a case in which distances from the curve start positions C1 to the deceleration start positions C3 of the outer curved section CA and of the inner curved section CB are the same, a deceleration until reaching the curve start position C1 of the outer curved section CA is greater than a deceleration until reaching the curve start position C1 of the inner curved section CB, which may cause sudden heavy braking to be applied.

Accordingly, in the present embodiment, a deceleration start position for entering into the outer curved section CA changes to a point C4 in front of the point C3. A distance L2 from the curve start position C1 to a deceleration start position C4 of the outer curved section CA is greater than the distance L1 from the curve start position C1 to the deceleration start position C3 of the inner curved section CB with the same curvature. In this way, a deceleration for entering into the outer curved section CA, and a deceleration for entering into the inner curved section CB, can be set to almost the same level. In other words, the distance L2 from the curve start position C1 to the deceleration start position C4 of the outer curved section CA is set to a distance allowing the vehicle to decelerate to the target speed V3 at a deceleration which is almost at the same level as the deceleration for decelerating to the target speed V2 from the deceleration start position C3 to the curve start position C1 of the inner curved section CB.

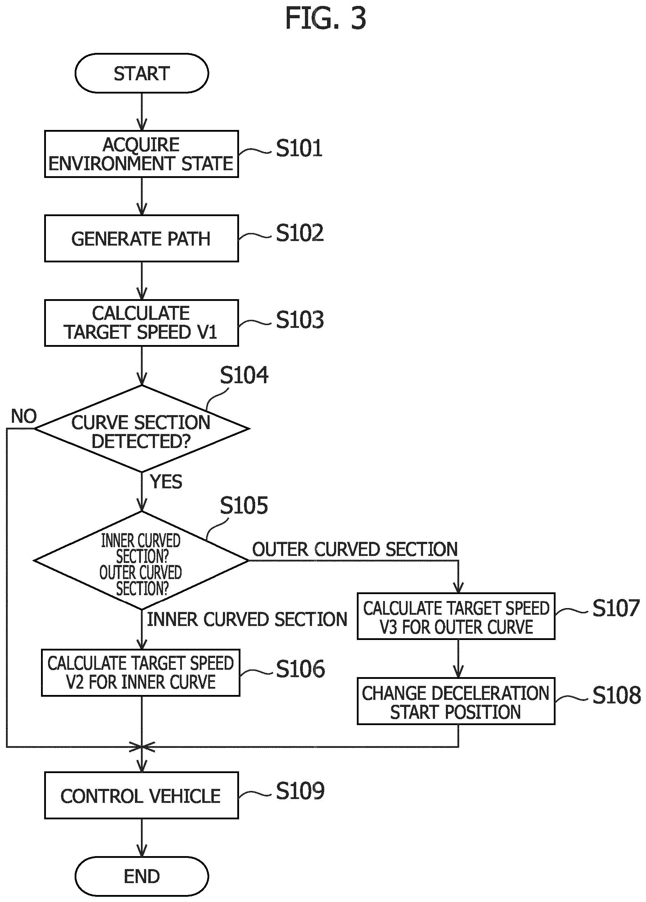

Hereinafter, a flow of speed control by the driving control apparatus 10 of the vehicle 1 in the present embodiment will be described in detail by using the flowchart of Figure 3. When a start of automated driving of the vehicle 1 is instructed by an operation of a switch or the like, which is not illustrated, the automated driving controller 30 starts a speed control process shown in Figure 3.

First, in step S101, the environment state acquiring part 31 acquires information related to a surrounding environment and information related to a vehicle state of the vehicle 1, from the external sensor 21 and the internal sensor 22. Moreover, the environment state acquiring part 31 acquires position information of the vehicle 1 from the positioning device 23, and acquires map information from the map information database 24.

In step S102, the path generating part 32 generates a driving path for the vehicle 1 to perform automated driving from an ego vehicle position of the vehicle 1 to an arrival target, based on the information acquired in step S101.

In step S103, the target speed calculating part 34 calculates the target speed V1 for the vehicle 1 to perform automated driving in accordance with the driving path generated in step S102. The target speed V1 is a vehicle speed calculated so as to keep a lateral acceleration rate to the prescribed value G1 or lower, based on the curvature radius R of the driving path acquired from road information of the map information database 24, and is a basic target speed that becomes a reference in automated driving.

In step S104, the curve detecting part 33 detects whether a curved section is present on the driving path generated in step S102, for example, based on the road information acquired from the map information database 24. Moreover, the curve detecting part 33 acquires information related to a location, a curvature, the start position C1, and the end position C2 of a curved section. If a curved section present on the driving path is detected by the curve detecting part 33, the process proceeds to step S105, and if a curved section is not detected, the process proceeds to step S109,

In step S105, the curve detecting part 33 determines whether the detected curved section is the inner curved section (left curved section) CB or the outer curved section (right curved section) CA. If the curved section is an inner curved section in which a driving traffic lane of the vehicle 1 is at the inner side in the curve, that is, the left curved section CB in left side traffic, the process proceeds to step S106. On the other hand, if the curved section is an outer curved section in which a driving traffic lane of the vehicle 1 is at the outer side in the curve, that is, the right curved section CA in left side traffic, the process proceeds to step S107,

In step S106, the target speed calculating part 34 calculates the target speed V2 for the left curved section CB. On the other hand, in step S107, the target speed calculating part 34 calculates the target speed V3 for the right curved section CA. The target speed V2 for the left curved section CB and the target speed V3 for the right curved section CA are less than the basic target speed V1, and the target speed V3 for the right curved section CA is less than the target speed V2 for the left curved section CB. Therefore, the basic target speed V1, the target speed V3 for the right curved section CA, and the target speed V2 for the left curved section CB satisfy the relationship of V1>V2>V3, in a case in which the curvatures of curved sections are the same.

In step S108, the vehicle control part 35 changes the deceleration start position for entering into the right curved section CA to the point C4 in front of the point C3. In this way, the distance L2 from the curve start position C1 to the deceleration start position C4 of the right curved section CA becomes greater than the distance L1 from the curve start position C1 to the deceleration start position C3 of the left curved section CB.

In step S109, the vehicle control part 35 executes drive control of the vehicle 1 by transmitting drive commands to the driving module 50 so as to start deceleration from the deceleration start position C3 or C4 and to drive in accordance with the driving path at the calculated target speed V1, V2, or V3.

In the driving control apparatus 10 for the vehicle 1 according to the first embodiment described above, the following operational effects can be accomplished.

(1) A driving control apparatus 10 for a vehicle 1 capable of executing automated driving includes an environment state acquiring part 31 for acquiring information related to a vehicle state and a surrounding environment of the vehicle 1, a path generating part 32 for generating a driving path for automated driving based on information acquired by the environment state acquiring part 31, a curve detecting part 33 for detecting a curved section present on the driving path based on information acquired by the environment state acquiring part 31, a target speed calculating part 34 for calculating a target speed for the vehicle 1 to perform automated driving in accordance with the driving path generated by the path generating part 32, and a vehicle control part 35 for performing speed control of the vehicle 1 so as to drive along the driving path at the target speed. The target speed calculating part 34 calculates a target speed (first vehicle speed) V1 as a target speed, such that a lateral acceleration rate of the vehicle is made to be a prescribed value G1 or lower, when the vehicle 1 performs automated driving in accordance with the driving path. In a case in which a curved section is present in the driving path, the target speed calculating part 34 sets a target speed for an inner curved section CB, in which a driving traffic lane of the vehicle 1 is at the inner side in a curve, to a target speed (second vehicle speed) V2 less than the target speed V1, and sets a target speed for an outer curved section CA, in which a driving traffic lane of the vehicle 1 is at the outer side in a curve, to a target speed (third vehicle speed) V3 less than the second target speed V2.

In the outer curved section CA in which the vehicle 1 drives in a traffic lane on the outer side in the curve, a passenger may feel a sensation of the vehicle 1 being pushed to the outside of a road by a centrifugal force, or may feel a sensation of the outside of a road approaching the vehicle 1, and thus, may feel uneasy. A passenger is more likely to feel uneasy when traveling through the right curved section CA in which a driving traffic lane is at an outer side in the curve than when traveling through the left curved section CB, even at a speed at which the same lateral acceleration rate is generated. Accordingly, by setting the target speed V2, V3 for the vehicle 1 to drive through a curved section by automated driving to be less than the basic target speed V1, a feeling of uneasiness by a passenger can be reduced during automated driving. In addition, by setting the target speed V3 in the right curved section (outer curved section) CA in which a driving traffic lane of the vehicle 1 is at the outer side in the curve to be less than the target speed V2 of the left curved section (inner curved section) CB in which a driving traffic lane of the vehicle 1 is at the inner side in the curve, it is possible to reliably reduce a feeling of uneasiness of the passenger in the outer curved section CA in which the vehicle travels in a traffic lane on the outer side in the curve. Since the target speed V2 of the inner curved section CB is set to be less than the basic target speed V1, and higher than the target speed V3 of the outer curved section CA, it is possible to reduce a feeling of discomfort of the passenger caused by the vehicle speed being too slow in the inner curved section CB in which a feeling of uneasiness, such as being pushed to the outside of the curve, is considered to be less than that of the outer curved section CA.

(2) The vehicle control part 35 is configured so as to start deceleration control for decelerating to the target speed for the curved section from a deceleration start position C3 set in front of a curve start position C1 of the curved section. The vehicle control part 35 sets a deceleration start position C4 for entering into the outer curved section CA, such that a distance L2 from the curve start position C1 of the outer curved section CA to the deceleration start position C4 becomes longer than a distance L1 from the curve start position C1 of the inner curved section CB to the deceleration start position C3.

In a case in which curvatures of curved sections are the same, since a target speed V3 of the outer curved section CA is less than a target speed V2 of the inner curved section CB, when deceleration starts from the same deceleration start positions C3, sudden heavy braking is generated at the outer curved section CA, and there is a possibility of providing a feeling of uneasiness to a passenger. By changing the deceleration start position C3 in the outer curved section CA to the point C4, the deceleration for entering into the outer curved section CA and the deceleration for entering into the inner curved section CB can be set to almost the same level.

(3) The curve detecting part 33 detects a curved section present on the driving path, before a start of automated driving, based on high precision three-dimensional map information acquired from the map information database 24. In this way, a load by a control process during automated driving can be reduced.

(4) The target speed calculating part 34 calculates the target speed V2, by multiplying the target speed V1 by a first speed adjustment gain (first coefficient) K1, and calculates the target speed V3 by multiplying the target speed V1 by a second speed adjustment gain (second coefficient) K2, which is less than the first speed adjustment gain K1. By appropriately adjusting the coefficients K1 and K2, the target speed V2 of the inner curved section CB and the target speed V3 of the outer curved section CA can be appropriately calculated, with the basic target speed V1 as a reference.

(5) Alternatively, the target speed calculating part 34 may calculate the target speed V2 in accordance with a curvature of the inner curved section CB, so as to maintain a lateral acceleration rate of the vehicle 1 up to a first limit value G2 less than the prescribed value G1, when the vehicle 1 drives through the inner curved section CB, or may calculate the target speed V3 in accordance with a curvature of the outer curved section CA, so as to maintain a lateral acceleration rate of the vehicle 1 up to a second limit value G3 less than the first limit value G2, when the vehicle 1 drives through the outer curved section CA. In this way, the target speed V2 of the inner curved section CB and the target speed V3 of the outer curved section CA can be appropriately calculated, from the viewpoint of a lateral acceleration rate acting on the vehicle 1 when driving through a curved section.

### Second Embodiment

Hereinafter, a driving control apparatus for vehicle according to a second embodiment of the present invention will be described. The basic configuration of the driving control apparatus for vehicle according to the second embodiment is the same as that of the first embodiment. Hereinafter, the differences with the first embodiment will be mainly described.

As described in the first embodiment, during traveling through the right curved section CA by automated driving, a passenger may have a feeling of uneasiness such as the vehicle 1 being pushed to the outside of a road by centrifugal force, or the outside of the road approaching the vehicle 1. If an obstacle such as a guard rail is present on the outside of a curve of the right curved section CA, a feeling of uneasiness by a passenger increases more. It can be considered that this is because a sensation occurs that a guard rail on the outside of a curve is approaching and will make contact with the vehicle 1 by a lateral acceleration acting on the vehicle 1. Moreover, while a traveling direction of the vehicle 1 is out of alignment with the direction that the vehicle 1 faces in a curved section (front of the vehicle front-rear direction), a passenger not actually performing a driving operation cannot predict a traveling direction of the vehicle 1 only from visual information. Accordingly, it can be considered that a passenger assumes the vehicle may make contact with an obstacle present in front of the vehicle 1, that is, on the outside of the curve, and has a feeling of uneasiness.

Accordingly, in the present embodiment, a target speed for driving through the right curved section CA is set differently for a case in which an obstacle such as a guard rail is present adjacent to the outer side in the curve of the right curved section CA, and for a case in which an obstacle such as a guard rail is not present. Specifically, a target speed of a case in which an obstacle is present adjacent to the outer side in the curve of the right curved section CA is set to be less than a target speed of a case in which an obstacle is not present.

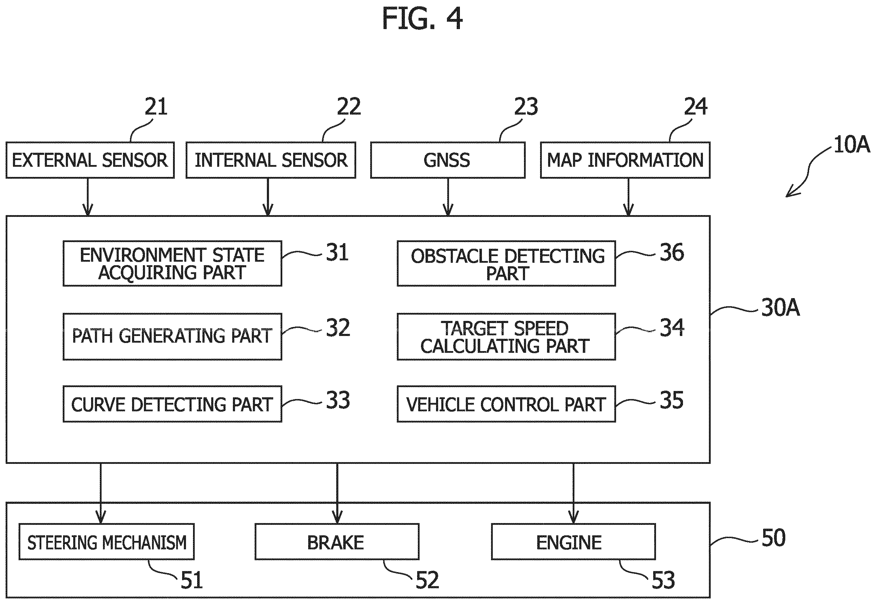

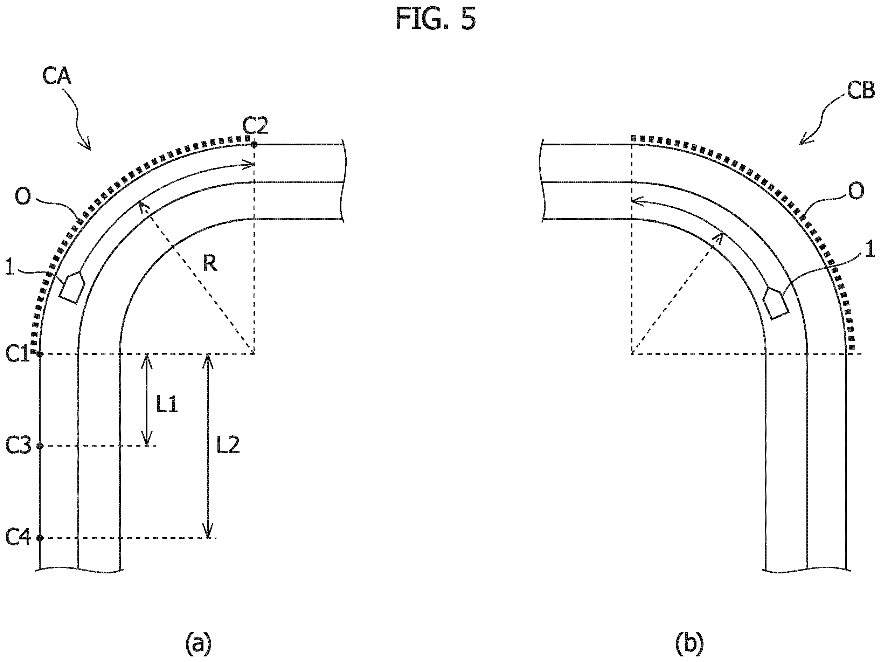

Figure 4 shows a schematic configuration of a driving control apparatus 10A of the vehicle 1 in the second embodiment, and Figures 5(a) and 5(b) schematically show a curved section in which a guard rail is present. The driving control apparatus 10A for the vehicle 1 additionally has an obstacle detecting part 36. An automated driving controller 30A is configured so as to functionally execute the obstacle detecting part 36, in addition to the functions described above.

Information related to an obstacle present on a road is stored, in association with position information of the road, in the map information database 24. Here, an obstacle present on a road includes objects installed adjacent to the outer side in a curve such as a guard rail, a side wall, and a sound barrier wall, and structures such as a tunnel present in a road. Here, the obstacle is an object that may provide a passenger with a sensation such as approaching the vehicle 1 in a curved section, and in particular, that is adjacent to a traffic lane with no road shoulder and has a height to a certain extent. Even if there are objects present along a road, objects having a height clearly lower than a line of sight of a passenger such as a curbstone, for example, are not included in the obstacles. Hereinafter, a case in which an obstacle is a guard rail will be described as an example.

Figure 5(a) shows the right curved section CA in which a guard rail O is present on the outside of a road, and Figure 5(b) shows the left curved section CB in which the guard rail O is present on the outside of a road. In the left curved section CB shown in Figure 5(b), the guard rail O is present on the outside of an oncoming traffic lane on the road right side, and is separated from a traffic lane of the vehicle 1. In this case, since it can be considered that there is a low probability of a passenger of the vehicle 1 having a feeling of uneasiness such as making contact with the guard rail O, the guard rail O present on the outside of the road of the left curved section CB, that is, adjacent to the outside of the curve of the inner curved section CB, does not correspond to the obstacle as described above. In the present embodiment, an object present on the outside of the road of the right curved section CA, that is, along the outside of the curve of the outer curved section CA, and having a height to a certain extent, is defined as the obstacle.

The obstacle detecting part 36 detects the obstacle, that is, the guard rail O, present on the outside of the road of the right curved section CA on the driving path. For example, the obstacle detecting part 36 detects whether or not the guard rail O is present on the outside of the road of the right curved section CA of the driving path, based on road information input from the map information database 24.

When the guard rail O present on the outside of a road of the right curved section CA on the driving path is detected by the obstacle detecting part 36, the target speed calculating part 34 sets a target speed in the right curved section CA to the target speed V4 that is less than the target speed V3. The target speed calculating part 34 calculates the target speed V4 of the right curved section CA with the guard rail O, for example, by multiplying the target speed V3 of the right curved section CA by a preset third speed adjustment gain K3. That is, the target speed of the right curved section CA with the guard rail O can be represented as V4=K3xV3. Here, the third speed adjustment gain K3 is set with an appropriate value in advance, so as to satisfy the relationship 1>K3. The target speeds V3 and V4 of curved sections withe the same curvature satisfy the relationship V3>V4.

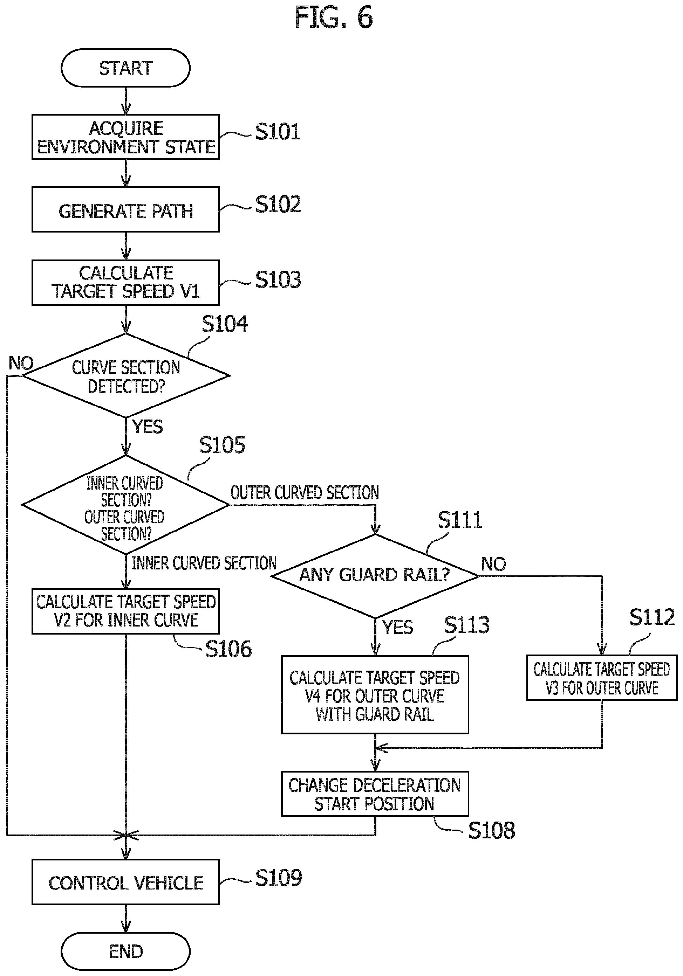

Hereinafter, a flow of speed control by the driving control apparatus 10A for the vehicle 1 in the present embodiment will be described in detail by using the flow chart of Figure 6. When a start of automated driving of the vehicle 1 is instructed by an operation of a switch or the like, which is not illustrated, the automated driving controller 30A starts a speed control process shown in Figure 6. Since the processes in steps S101 to S106 shown in Figure 6 are the same as the processes in steps S101 to S106 of the flow chart of Figure 3, a description of these processes will be omitted.

In step S105, when it is determined that a curved section detected in step S104 is an outer curved section in which a driving traffic lane of the vehicle 1 is the outer side in the curve, that is, the right curved section CA in left side traffic, the process proceeds to step S111.

In step S111, the obstacle detecting part 36 determines whether the guard rail O is present along the outside of the curve of the right curved section CA, such as shown in Figure 5(a), for example, based on road information acquired from the map information database 24. In a case in which the guard rail O is not present in the right curved section CA, the process proceeds to step S112, and the target speed V3 for the right curved section CA is calculated. On the other hand, in a case in which the guard rail O is present in the right curved section CA, the process proceeds to step S113.

In step S113, the target speed calculating part 34 calculates the target speed V4 for the right curved section CA with the guard rail O. The target speed V4 for the right curved section CA with the guard rail O is set to be less than the target speed V3 for the outer curved section CA, in which the curvature is the same, with no guard rail O.

In step S108, the vehicle control part 35 changes a deceleration start position for entering into the right curved section CA to the point C4 in front of the point C3. In this way, the distance L2 from the curve start position C1 to the deceleration start position C4 of the right curved section CA is made longer than the distance L1 from the curve start position C1 to the deceleration start position C3 of the left curved section CB. Note that the distance from the deceleration start position C4 to the curve start position C1 for entering into the right curved section CA with the guard rail O may be set to be longer than the distance from the deceleration start position C4 to the curve start position C1 for entering into the right curved section CA with no guard rail O, so as to enable deceleration to the target speed V3 or to the target speed V4 at a deceleration rate approximately of the same extent.

In step S109, the vehicle control part 35 executes drive control of the vehicle 1 by transmitting drive commands to the driving module 50 so as to start deceleration from the deceleration start position C3 or C4 and so as to drive in accordance with the driving path at the calculated target speed V1, V2, V3, or V4.

While an example of a case in which the obstacle O is a guard rail has been described, a change of a target speed and a deceleration start position can be similarly performed in a case in which the obstacle O is a different object, for example, a side wall of a tunnel. In this case, in step S111 of the flow chart of Figure 6, for example, it is determined whether or not the vehicle 1 is inside a tunnel. If the vehicle 1 is inside a tunnel, the target speed V4 is calculated in step S113, and if the vehicle 1 is not in a tunnel, the target speed V3 is calculated in step S112.

In the driving control apparatus 10A for the vehicle 1 according to the second embodiment described above, the following operational effects can be accomplished, in addition to the effects by the first embodiment described above.

(1) The obstacle detecting part 36 is configured so as to detect the obstacle O present on the outside of a road along the outer curved section CA, based on information acquired by the environment state acquiring part 31. In a case in which the obstacle O present along the outer curved section CA is detected by the obstacle detecting part 36, the target speed calculating part 34 sets a target speed for the outer curved section CA to a target speed (fourth vehicle speed) V4 less than the target speed V3. In a case in which the obstacle O such as a guard rail is present adjacent to the outer side in the curve of the outer curved section CA, a feeling of uneasiness of a passenger such that contact may be made with the obstacle O, may increase. The feeling of uneasiness of the passenger can be reduced by making the target speed V4 of the outer curved section CA with the obstacle O less than the target speed V3 of the outer curved section CA with no obstacle O.
(2) The obstacle detecting part 36 detects the obstacle O present along the curved section before a start of automated driving, based on high precision three-dimensional map information acquired from the map information database 24. In this way, a load by a control process during automated driving can be reduced.

### Third Embodiment

Hereinafter, a driving control apparatus for vehicle according to a third embodiment of the present invention will be described. The basic configuration of the driving control apparatus for vehicle according to the third embodiment is the same as that of the first and second embodiments. Hereinafter, the differences with the second embodiment will be mainly described.

In the embodiments described above, a target speed for the vehicle 1 traveling through a curved section by automatic driving is adjusted. In the present embodiment, a target speed for automated driving is further adjusted by taking into consideration a gradient of a road. For example, in a case in which a curved section is a downward slope, it can be considered that a feeling of uneasiness of a passenger increases, such as being pushed to the outside of a road or that contact may be made with the guard rail O. Accordingly, in the present embodiment, in a road with a downward gradient of a prescribed percent or higher, a target speed is set to be lower compared to on a flat road.

The curved section detecting part 33 can detect whether or not the curved section on the driving path, in particular, the right curved section CA with the guard rail O, is present in a downward gradient, for example, based on road information acquired from the map information database 24.

The target speed calculating part 34, for example, sets the above-described target speed V4 if the right curved section CA with the guard rail O is a flat road, and sets a target speed to a target speed V5 less than the target speed V4 if the right curved section CA with the guard rail O is a downward gradient.

The target speed calculating part 34, for example, calculates the target speed V5 of the right curved section CA of a downward gradient with the guard rail O, by multiplying the target speed V4 of the right curved section CA with the guard rail O by a preset fourth speed adjustment gain K4. That is, the target speed of the right curved section CA of a downward gradient with the guard rail O can be represented as V5=K4xV4. Here, the fourth speed adjustment gain K4 is set with an appropriate value in advance, so as to satisfy the relationship 1>K4. The target speeds V4 and V5 of curved sections with the same curvature satisfy the relationship V4>V5.

The vehicle control part 35 transmits drive commands to the driving module 50, and executes driving control of the vehicle 1, so as to drive along the driving path at the calculated target speed.

Note that it is possible to combine the present embodiment with the first embodiment. That is, the curved section detecting part 33 may detect whether or not the right curved section CA on the driving path is present in a downward gradient, regardless of the presence or absence of the guard rail O. The target speed calculating part 34 sets the target speed V3 described above in a case in which the right curved section CA is a flat road, and sets a target speed to the target speed V5 in a case in which the right curved section CA is a downward gradient.

In the driving control apparatus for the vehicle 1 according to the described third embodiment, the following operational effects can be accomplished, in addition to the effects according to the first and second embodiments described above.

In a case in which the curved detecting part 33 detects that the outer curved section CA is present in a downward gradient, the target speed calculating part 34 sets a target speed in the outer curved section CA to a target speed (fifth vehicle speed) V5 less than a target speed (fourth vehicle speed) V4. In this way, in a case in which the right curved section CA with the guard rail O is a downward gradient, a feeling of uneasiness of a passenger such as being pushed to the outside of a road or that contact will be made with the guard rail O can be reduced.

### Fourth Embodiment

Hereinafter, a driving control apparatus for vehicle according to a fourth embodiment of the present invention will be described. The basic configuration of the driving control apparatus for vehicle according to the fourth embodiment is the same as that of the first to third embodiments described above. Hereinafter, the differences with the first embodiment will be mainly described.

In the embodiments described above, a target speed is adjusted in order to reduce a feeling of uneasiness of a passenger in a case in which the vehicle 1 drives through a curved section by automated driving. It can be considered that this feeling of uneasiness becomes remarkable at a time of the vehicle 1 driving in a traffic lane which is at the outermost in the curved section. Accordingly, in the present embodiment, it is configured so as to perform the above described adjustment of the target speed and the deceleration start position, only in a case in which the vehicle 1 is driving in the outermost traffic lane in the curve on the road having a plurality of traffic lanes in the same traffic direction, such as a road having two or more traffic lanes in one side.

The environment state acquiring part 31 can determine whether or not the vehicle 1 is driving in the outermost traffic lane of the right curved section CA, that is, whether or not the vehicle 1 is driving in the traffic lane the most on the left side, for example, based on the external data such as image data and point cloud data input from the external sensor 21.
Note that in a case in which the right curved section CA is a road with only one traffic lane, it can be determined that the vehicle 1 is driving in the outermost traffic lane of the right curved section CA.

When it is determined that the vehicle 1 is driving in the outermost traffic lane of the right curved section CA, the target speed calculating part 34 calculates the target speed V3 for the right curved section CA, and the vehicle control part 35 changes a deceleration start position for entering into the right curved section CA to the point C4 in front of point C3. When it is determined that the vehicle 1 is driving in a traffic lane other than the outermost traffic lane of the right curved section CA, the target speed calculating part 34 may set a value that is the same as the basic target speed V1 or the target speed V2 for the left curved section CB, for example, as the target speed for driving in a traffic lane other than the outermost traffic lane of the right curved section CA.

Alternatively, it can be configured as follows. For example, when it is determined that a curved section on a driving path is the right curved section CA, the target speed calculating part 34 calculates the target speed V3 for the right curved section CA, and the vehicle speed control part 35 changes a deceleration start position for entering into the right curved section CA to the point C4 in front of the point C3. If it is determined that the vehicle 1 is approaching the right curved section CA by automated driving, and the vehicle 1 is driving in a traffic lane other than the outermost traffic lane of the right curved section CA, the target speed calculating part 34 changes a target speed from the target speed V3 to the target speed V1 or to the target speed V2, and the vehicle control part 35 returns a deceleration start position to the point C3 from the point C4.

In the driving control apparatus for the vehicle 1 according to the described fourth embodiment, the following operational effects can be accomplished, in addition to the effects according to the first to third embodiments described above.

In a case in which the outer curved section CA present on the driving path has a plurality of traffic lanes, the target speed calculating part 34 sets a target speed to the third vehicle speed V3, and the vehicle control part 35 performs a change of a deceleration start position, only if the driving traffic lane of the vehicle 1 is the outermost traffic lane of the plurality of traffic lanes. In a case in which the right curved section CA is a road with two or more traffic lanes in one side, the feeling of uneasiness, such as being pushed to the outside of the road, is strong when the vehicle 1 drives in the outermost traffic lane of the curve (traffic lane on the left end). Accordingly, the feeling of uneasiness can be reduced, by limiting a change of the target speed and the deceleration start position to the case in which the vehicle 1 drives in the outermost traffic lane of the outer curved section CA. Moreover, in a case in which the vehicle 1 drives in another traffic lane, which takes into consideration that the feeling of uneasiness is less compared to the outermost traffic lane, since a change of the target speed and the deceleration start position is not performed, an uncomfortable feeling provided to the passenger by the vehicle speed of the curved section being too slow can be reduced, and an influence on the total driving time of the vehicle 1 to the arrival target can be reduced to a minimum.

### Modified Embodiments

(1) In the embodiments described above, the deceleration start position for entering into the outer curved section CA is changed to the point C4 in front of the point C3 separated from the curve start point C1 by the prescribed distance L1. However, it is not limited to this, and the deceleration start position may be fixed to the point C3 of the prescribed distance L1 from the curve start point C1, or the deceleration start position may not be changed. Moreover, it may be configured so as to decelerate at a constant deceleration for entering into a curved section regardless of whether the outer curved section CA or the inner curved section CB, instead of changing the deceleration start position for entering into the outer curved section CA.
(2) In the embodiments described above, the target speeds V2 and V3 of the inner curved section CB and the outer curved section CA are each calculated, by using the first and second speed adjustment gains K1 and K2 or the first and second limit values G2 and G3 of the lateral acceleration rate, with the target speed V1, at which the lateral acceleration rate is made to be the prescribed value G1 or less, being set as a reference. However, it is not limited to this, and it may be configured so as to respectively determine the target speeds V2 and V3, from speed maps of the inner curved section CB and the outer curved section CA prepared in advance for each curvature.
(3) In the embodiments described above, the curve detecting part 33 detects whether or not a curved section is present on the driving path, based on the information related to a road shape input from the map information database 24; however, it is not limited to this. For example, the curve detecting part 33 may be configured so as to detect a curved section present on the driving path, based on the external data such as the image data and point cloud data input from the external sensor 21. However, as described above, the load by the control process during automated driving can be reduced, by detecting the curved section before a start of automated driving, based on the high precision three-dimensional map information acquired from the map information database 24. Moreover, the obstacle detecting part 36 may similarly detect whether or not the obstacle O, such as a guard rail, is present along the outer side of the road of the right curved section CA on the driving path, based on the external data such as the image data and point cloud data input from the external sensor 21, instead of the road information input from the map information database 24.

Alternatively, in a case in which the vehicle 1 drives at a speed set by a user, which is the limit speed of the road or less, for example, the curve detecting part 33 may be configured so as to determine a section in which the lateral acceleration rate exceeding a preset value is generated as a curved section. The lateral acceleration rate of the vehicle 1 when traveling in the driving path can be calculated, for example, based on a curvature of a road acquired by the environment state acquiring part 31, a target steering angle for automated driving or the like. The load by the control process during automated driving can be reduced, by detecting the curved section before a start of automated driving.

(4) In the embodiments described above, the basic target speed V1, the target speed V2 for the inner curved section CB, and the target speed V3 for the outer curved section CA are set so as to satisfy the relationship of V1>V2>V3. However, it is not limited to this, and the basic target speed V1 may be used as it is as the target speed V2 for the inner curved section CB.

Heretofore, while several embodiments of the present invention have been described, the present invention is not limited to these embodiments, and it is additionally stated that various types of modifications and changes are also possible within the scope of the present invention as defined by the appended claims.

### [Reference Signs List]

- 1: vehicle
- 10, 10A: driving control apparatus
- 24: map information database
- 30, 30A: automated driving controller
- 31: environment state acquiring part
- 32: path generating part
- 33: curve detecting part
- 34: target speed calculating part
- 35: vehicle control part
- 36: obstacle detecting part
- C1: curve start position
- C3, C4: deceleration start position
- G1: prescribed value of lateral acceleration rate
- G2, G3: first and second limit value
- K1-K4: first to fourth speed adjustment gain

## Claims

1. A driving control apparatus (10, 10A) for vehicle (1) capable of executing automated driving, the driving control apparatus (10, 10A) for vehicle (1) comprising:
an environment state acquiring part (31) configured to acquire information related to a vehicle state and a surrounding environment of the vehicle (1);
a path generating part (32) configured to generate a driving path for automated driving based on information acquired by the environment state acquiring part (31);
a curve detecting part (33) configured to detect a curved section present on the driving path based on information acquired by the environment state acquiring part (31);
a target speed calculating part (34) configured to calculate a target speed for the vehicle (1) to perform automated driving in accordance with the driving path generated by the path generating part (32); and
a vehicle control part (35) configured to perform speed control of the vehicle (1) so as to drive along the driving path at the target speed, wherein:
the target speed calculating part (34) is configured to calculate a first vehicle speed (V1) as the target speed such that a lateral acceleration rate of the vehicle (1) is made to be a prescribed value (G1) or lower when the vehicle (1) performs automated driving in accordance with the driving path; and
in a case in which a curved section is present in the driving path, the target speed calculating part (34) is configured to
set the target speed for an inner curved section (CB), in which a driving traffic lane of the vehicle (1) is at an inner side in a curve, to a second vehicle speed (V2) less than the first vehicle speed (V1), **characterized in that**
in the case in which the curved section is present in the driving path, the target speed calculating part (34) is configured to set the target speed for an outer curved section (CA), in which a driving traffic lane of the vehicle (1) is at an outer side in a curve, to a third vehicle speed less (V3) than the second vehicle speed (V2).

2. The driving control apparatus (10, 10A) for vehicle (1) according to claim 1, further comprising:
an obstacle detecting part (36) configured to detect an obstacle present on an outside of a road along the outer curved section (CA) based on information acquired by the environment state acquiring part (31), wherein
in a case in which the obstacle present along the outer curved section (CA) is detected by the obstacle detecting part (36), the target speed calculating part (34) is configured to set the target speed for the outer curved section (CA) to a fourth vehicle speed (V4) less than the third vehicle speed (V3).

3. The driving control apparatus (10, 10A) for vehicle (1) according to claim 2, wherein
in a case in which the outer curved section (CA) is detected as present in a downward gradient by the curve detecting part (33), the target speed calculating part (34) is configured to set the target speed for the outer curved section (CA) to a fifth vehicle speed (V5) less than the fourth vehicle speed (V4).

4. The driving control apparatus (10, 10A) for vehicle (1) according to any one of claims 1 to 3, wherein:
the vehicle control part (35) is configured to start deceleration control for decelerating to the target speed for the curved section from a deceleration start position (C3) set in front of a curve start position (C1) of the curved section; and
the vehicle control part (35) is configured to change the deceleration start position (C3) for entering into the outer curved section (CA) such that a distance (L2) from a curve start position (C1) of the outer curved section (CA) to the deceleration start position (C4) becomes longer than a distance (L1) from a curve start position (C1) of the inner curved section (CB) to the deceleration start position (C3).

5. The driving control apparatus (10, 10A) for vehicle (1) according to claim 4, wherein
in a case in which the outer curved section (CA) present on the driving path has a plurality of traffic lanes, the target speed calculating part (34) is configured to set the target speed to the third vehicle speed (V3) and the vehicle control part (35) is configured to perform a change of the deceleration start position only if a driving traffic lane of the vehicle (1) is an outermost traffic lane of the plurality of traffic lanes.

6. The driving control apparatus (10, 10A) for vehicle (1) according to claim 2, wherein:
the curve detecting part (33) is configured to detect the curved section present on the driving path before a start of the automated driving based on high precision three-dimensional map information obtained from a map information database (24); and
the obstacle detecting part (36) detects the obstacle before the start of the automated driving based on the high precision three-dimensional map information.

7. The driving control apparatus (10, 10A) for vehicle (1) according to claim 1, wherein
the target speed calculating part (34) is configured to
calculate the second vehicle speed (V2) by multiplying the first vehicle speed (V1) by a first coefficient (K1), and
calculate the third vehicle speed (V3) by multiplying the first vehicle speed (V1) by a second coefficient (K2) less than the first coefficient (K1).

8. The driving control apparatus (10, 10A) for vehicle (1) according to claim 1, wherein
the target speed calculating part (34) is configured to
calculate the second vehicle speed (V2) in accordance with a curvature of the inner curved section (CB) so as to maintain a lateral acceleration rate of the vehicle (1) up to a first limit value (G2) less than the prescribed value (G1) when the vehicle (1) drives through the inner curved section (CB), and
calculate the third vehicle speed (V3) in accordance with a curvature of the outer curved section (CA) so as to maintain a lateral acceleration rate of the vehicle (1) up to a second limit value (G3) less than the first limit value (G2) when the vehicle (1) drives through the outer curved section (CA).

## Patentansprüche

1. Fahrsteuerungsvorrichtung (10, 10A) für ein Fahrzeug (1), welches in der Lage ist, automatisiertes Fahren auszuführen, wobei die Fahrsteuerungsvorrichtung (10, 10A) für ein Fahrzeug (1) umfasst:
einen Umgebungszustand-Erfassungsteil (31), welcher dazu eingerichtet ist, Informationen in Bezug auf einen Fahrzeugzustand und eine umliegende Umgebung des Fahrzeugs (1) zu erfassen;
einen Weggenerierungsteil (32), welcher dazu eingerichtet ist, einen Fahrweg für automatisiertes Fahren auf Grundlage von Informationen zu generieren, welche durch den Umgebungszustand-Erfassungsteil (31) erfasst sind;
einen Kurvenerkennungsteil (33), welcher dazu eingerichtet ist, einen Kurvenabschnitt, welcher auf dem Fahrweg vorliegt, auf Grundlage von Informationen zu erkennen, welche durch den Umgebungszustand-Erfassungsteil (31) erfasst sind;
einen Zielgeschwindigkeit-Berechnungsteil (34), welcher dazu eingerichtet ist, eine Zielgeschwindigkeit für das Fahrzeug (1) zu berechnen, um automatisiertes Fahren gemäß dem Fahrweg durchzuführen, welcher von dem Wegerzeugungsteil (32) generiert ist; und
einen Fahrzeugsteuerungsteil (35), welcher dazu eingerichtet ist, eine Geschwindigkeitssteuerung des Fahrzeugs (1) durchzuführen, so dass es mit der Zielgeschwindigkeit entlang des Fahrwegs fährt, wobei:
der Zielgeschwindigkeit-Berechnungsteil (34) dazu eingerichtet ist, eine erste Fahrzeuggeschwindigkeit (V1) als die Zielgeschwindigkeit derart zu berechnen, dass eine laterale Beschleunigungsrate des Fahrzeugs (1) derart gestaltet ist, dass sie ein vorgegebener Wert (G1) oder niedriger ist, wenn das Fahrzeug (1) automatisiertes Fahren gemäß dem Fahrweg durchführt; und
in einem Fall, in welchem ein Kurvenabschnitt in dem Fahrweg vorliegt, der Zielgeschwindigkeit-Berechnungsteil (34) dazu eingerichtet ist,
die Zielgeschwindigkeit für einen inneren Kurvenabschnitt (CB), in welchem sich eine befahrene Fahrspur des Fahrzeugs (1) an einer inneren Seite in einer Kurve befindet, auf eine zweite Fahrzeuggeschwindigkeit (V2) festzulegen, welche niedriger als die erste Fahrzeuggeschwindigkeit (V1) ist, **dadurch gekennzeichnet, dass**
in dem Fall, in welchem der Kurvenabschnitt in dem Fahrweg vorliegt, der Zielgeschwindigkeit-Berechnungsteil (34) dazu eingerichtet ist, die Zielgeschwindigkeit für einen äußeren Kurvenabschnitt (CA), in welchem sich eine befahrene Fahrspur des Fahrzeugs (1) an einer äußeren Seite in einer Kurve befindet, auf eine dritte Fahrzeuggeschwindigkeit (V3) festzulegen, welche niedriger als die zweite Fahrzeuggeschwindigkeit (V2) ist.

2. Fahrsteuerungsvorrichtung (10, 10A) für ein Fahrzeug (1) nach Anspruch 1, ferner umfassend:
einen Hinderniserkennungsteil (36), welcher dazu eingerichtet ist, ein Hindernis, welches außerhalb einer Straße entlang des äußeren Kurvenabschnitts (CA) vorliegt, auf Grundlage von Informationen zu erkennen, welche von dem Umgebungszustand-Erfassungsteil (31) erfasst sind, wobei
in einem Fall, in welchem das Hindernis, welches entlang des äußeren Kurvenabschnitts (CA) vorliegt, von dem Hinderniserkennungsteil (36) erkannt ist, der Zielgeschwindigkeit-Berechnungsteil (34) dazu eingerichtet ist, die Zielgeschwindigkeit für den äußeren Kurvenabschnitt (CA) auf eine vierte Fahrzeuggeschwindigkeit (V4) festzulegen, welche niedriger als die dritte Fahrzeuggeschwindigkeit (V3) ist.

3. Fahrsteuerungsvorrichtung (10, 10A) für ein Fahrzeug (1) nach Anspruch 2, wobei
in einem Fall, in welchem der äußere Kurvenabschnitt (CA) durch den Kurvenerkennungsteil (33) als in einem Gefälle nach unten vorliegend erkannt ist, der Zielgeschwindigkeit-Berechnungsteil (34) dazu eingerichtet ist, die Zielgeschwindigkeit für den äußeren Kurvenabschnitt (CA) auf eine fünfte Fahrzeuggeschwindigkeit (V5) festzulegen, welche niedriger als die vierte Fahrzeuggeschwindigkeit (V4) ist.

4. Fahrsteuerungsvorrichtung (10, 10A) für ein Fahrzeug (1) nach einem der Ansprüche 1 bis 3, wobei:
der Fahrzeugsteuerungsteil (35) dazu eingerichtet ist, eine Verzögerungssteuerung zum Verzögern auf die Zielgeschwindigkeit für den Kurvenabschnitt von einer Verzögerungsstartposition (C3) aus zu starten, welche vor einer Kurvenstartposition (C1) des Kurvenabschnitts festgelegt ist; und
der Fahrzeugsteuerungsteil (35) dazu eingerichtet ist, die Verzögerungsstartposition (C3) für ein Einfahren in den äußeren Kurvenabschnitt (CA) derart zu ändern, dass eine Distanz (L2) von einer Kurvenstartposition (C1) des äußeren Kurvenabschnitts (CA) zu der Verzögerungsstartposition (C4) länger wird als eine Distanz (L1) von einer Kurvenstartposition (C1) des inneren Kurvenabschnitts (CB) zu der Verzögerungsstartposition (C3).

5. Fahrsteuerungsvorrichtung (10, 10A) für ein Fahrzeug (1) nach Anspruch 4, wobei in einem Fall, in welchem der äußere Kurvenabschnitt (CA), welcher auf dem Fahrweg vorliegt, eine Mehrzahl an Fahrspuren aufweist, der Zielgeschwindigkeit-Berechnungsteil (34) dazu eingerichtet ist, die Zielgeschwindigkeit auf die dritte Fahrzeuggeschwindigkeit (V3) festzulegen, und der Fahrzeugsteuerungsteil (35) dazu eingerichtet ist, eine Änderung der Verzögerungsstartposition nur durchzuführen, falls eine befahrene Fahrspur des Fahrzeugs (1) die äußerste Fahrspur der Mehrzahl von Fahrspuren ist.

6. Fahrsteuerungsvorrichtung (10, 10A) für ein Fahrzeug (1) nach Anspruch 2, wobei
der Kurvenerkennungsteil (33) dazu eingerichtet ist, den Kurvenabschnitt, welcher auf dem Fahrweg vorliegt, vor einem Start des automatisierten Fahrens auf Grundlage hochpräziser dreidimensionaler Karteninformationen zu erkennen, welche aus einer Karteninformationen-Datenbank (24) erhalten werden; und
der Hinderniserkennungsteil (36) das Hindernis vor dem Start des automatisierten Fahrens auf Grundlage der hochpräzisen dreidimensionalen Karteninformationen erkennt.

7. Fahrsteuerungsvorrichtung (10, 10A) für ein Fahrzeug (1) nach Anspruch 1, wobei
der Zielgeschwindigkeit-Berechnungsteil (34) dazu eingerichtet ist, die zweite Fahrzeuggeschwindigkeit (V2) durch Multiplizieren der ersten Fahrzeuggeschwindigkeit (V1) mit einem ersten Koeffizienten (K1) zu berechnen, und
die dritte Fahrzeuggeschwindigkeit (V3) durch Multiplizieren der ersten Fahrzeuggeschwindigkeit (V1) mit einem zweiten Koeffizienten (K2) zu berechnen, welcher niedriger als der erste Koeffizient (K1) ist.

8. Fahrsteuerungsvorrichtung (10, 10A) für ein Fahrzeug (1) nach Anspruch 1, wobei
der Zielgeschwindigkeitsberechnungsteil (34) dazu eingerichtet ist,
die zweite Fahrzeuggeschwindigkeit (V2) gemäß einer Krümmung des inneren Kurvenabschnitts (CB) zu berechnen, um eine laterale Beschleunigungsrate des Fahrzeugs (1) bis zu einem ersten Grenzwert (G2) beizubehalten, welcher niedriger als der vorgegebene Wert (G1) ist, wenn das Fahrzeug (1) durch den inneren Kurvenabschnitt (CB) fährt, und
die dritte Fahrzeuggeschwindigkeit (V3) gemäß einer Krümmung des äußeren Kurvenabschnitts (CA) zu berechnen, um eine laterale Beschleunigungsrate des Fahrzeugs (1) bis zu einem zweiten Grenzwert (G3) beizubehalten, welcher niedriger als der erste Grenzwert (G2) ist, wenn das Fahrzeug (1) durch den äußeren Kurvenabschnitt (CA) fährt.

## Revendications

1. Appareil de contrôle de conduite (10, 10A) pour véhicule (1) capable d'exécuter une conduite automatisée, l'appareil de contrôle de conduite (10, 10A) pour véhicule (1) comprenant :
une partie d'acquisition d'état d'environnement (31) configurée pour acquérir des informations relatives à un état de véhicule et à un environnement ambiant du véhicule (1) ;
une partie de génération de parcours (32) configurée pour générer un parcours de conduite pour une conduite automatisée sur la base d'informations acquises par la partie d'acquisition d'état d'environnement (31) ;
une partie de détection de virage (33) configurée pour détecter une section en virage présente sur le parcours de conduite sur la base d'informations acquises par la partie d'acquisition d'état d'environnement (31) ;
une partie de calcul de vitesse cible (34) configurée pour calculer une vitesse cible pour que le véhicule (1) réalise une conduite automatisée conformément au parcours de conduite généré par la partie de génération de parcours (32) ; et
une partie de contrôle de véhicule (35) configurée pour réaliser un contrôle de vitesse du véhicule (1) de façon à conduire le long du parcours de conduite à la vitesse cible,
dans lequel :
la partie de calcul de vitesse cible (34) est configurée pour calculer une première vitesse de véhicule (V1) comme étant la vitesse cible de sorte qu'un taux d'accélération latérale du véhicule (1) soit amené à valoir une valeur prescrite (G1) ou
inférieure lorsque le véhicule (1) réalise une conduite automatisée conformément au parcours de conduite ; et
dans un cas où une section en virage est présente dans le parcours de conduite, la partie de calcul de vitesse cible (34) est configurée pour
régler la vitesse cible pour une section en virage intérieure (CB), dans laquelle une voie de circulation de conduite du véhicule (1) se trouve sur un côté intérieur dans un virage, sur une deuxième vitesse de véhicule (V2) inférieure à la première vitesse de véhicule (V1), **caractérisé en ce que**
dans le cas où la section en virage est présente dans le parcours de conduite, la partie de calcul de vitesse cible (34) est configurée pour régler la vitesse cible pour une section en virage extérieure (CA), dans laquelle une voie de circulation de conduite du véhicule (1) se trouve sur un côté extérieur dans un virage, sur une troisième vitesse de véhicule inférieure (V3) à la deuxième vitesse de véhicule (V2).

2. Appareil de contrôle de conduite (10, 10A) pour véhicule (1) selon la revendication 1, comprenant en outre :
une partie de détection d'obstacle (36) configurée pour détecter un obstacle présent sur un extérieur d'une route le long de la section en virage extérieure (CA) sur la base d'informations acquises par la partie d'acquisition d'état d'environnement (31), dans lequel
dans un cas où l'obstacle présent le long de la section en virage extérieure (CA) est détecté par la partie de détection d'obstacle (36), la partie de calcul de vitesse cible (34) est configurée pour régler la vitesse cible pour la section en virage extérieure (CA) sur une quatrième vitesse de véhicule (V4) inférieure à la troisième vitesse de véhicule (V3).

3. Appareil de contrôle de conduite (10, 10A) pour véhicule (1) selon la revendication 2, dans lequel
dans un cas où la section en virage extérieure (CA) est détectée comme étant présente dans une pente descendante par la partie de détection de virage (33), la partie de calcul de vitesse cible (34) est configurée pour régler la vitesse cible pour la section en virage extérieure (CA) sur une cinquième vitesse de véhicule (V5) inférieure à la quatrième vitesse de véhicule (V4).

4. Appareil de contrôle de conduite (10, 10A) pour véhicule (1) selon l'une quelconque des revendications 1 à 3, dans lequel :
la partie de contrôle de véhicule (35) est configurée pour débuter un contrôle de décélération pour une décélération jusqu'à la vitesse cible pour la section en virage extérieure à partir d'une position de début de décélération (C3) placée à l'avant d'une position de début de virage (C1) de la section en virage ; et
la partie de contrôle de véhicule (35) est configurée pour modifier la position de début de décélération (C3) pour l'entrée dans la section en virage extérieure (CA) de sorte qu'une distance (L2) d'une position de début de virage (C1) de la section en virage extérieure (CA) à la position de début de décélération (C4) devienne plus longue qu'une distance (L1) d'une position de début de virage (C1) de la section en virage intérieure (CB) à la position de début de décélération (C3).

5. Appareil de contrôle de conduite (10, 10A) pour véhicule (1) selon la revendication 4, dans lequel
dans un cas où la section en virage extérieure (CA) présente sur le parcours de conduite possède une pluralité de voies de circulation, la partie de calcul de vitesse cible (34) est configurée pour régler la vitesse cible sur la troisième vitesse de véhicule (V3) et la partie de contrôle de véhicule (35) est configurée pour réaliser un changement de la position de début de décélération uniquement si une voie de circulation de conduite du véhicule (1) est une voie de circulation la plus extérieure de la pluralité de voies de circulation.

6. Appareil de contrôle de conduite (10, 10A) pour véhicule (1) selon la revendication 2, dans lequel :
la partie de détection de virage (33) est configurée pour détecter la section en virage présente sur le parcours de conduite avant un début de la conduite automatisée sur la base d'informations cartographiques tridimensionnelles de haute précision obtenues auprès d'une base de données d'informations cartographiques (24) ; et
la partie de détection d'obstacle (36) détecte l'obstacle avant le début de la conduite automatisée sur la base des informations cartographiques tridimensionnelles de haute précision.

7. Appareil de contrôle de conduite (10, 10A) pour véhicule (1) selon la revendication 1, dans lequel
la partie de calcul de vitesse cible (34) est configurée pour
calculer la deuxième vitesse de véhicule (V2) par la multiplication de la première vitesse de véhicule (V1) par un premier coefficient (K1), et
calculer la troisième vitesse de véhicule (V3) par la multiplication de la première vitesse de véhicule (V1) par un deuxième coefficient (K2) inférieur au premier coefficient (K1).

8. Appareil de contrôle de conduite (10, 10A) pour véhicule (1) selon la revendication 1, dans lequel
la partie de calcul de vitesse cible (34) est configurée pour
calculer la deuxième vitesse de véhicule (V2) conformément à une courbure de la section en virage intérieure (CB) de façon à conserver un taux d'accélération latérale du véhicule (1) jusqu'à une première valeur limite (G2) inférieure à la valeur prescrite (G1) lorsque le véhicule (1) circule sur la section en virage intérieure (CB), et
calculer la troisième vitesse de véhicule (V3) conformément à une courbure de la section en virage extérieure (CA) de façon à conserver un taux d'accélération latérale du véhicule (1) jusqu'à une deuxième valeur limite (G3) inférieure à la première valeur limite (G2) lorsque le véhicule (1) circule sur la section en virage extérieure (CA).
